Europäisches Patentamt

European Patent Office

Office européen des brevets

(19)

(11) Veröffentlichungsnummer: **0 150 340**
**B1**

(12)

# EUROPÄISCHE PATENTSCHRIFT

(45) Veröffentlichungstag der Patentschrift:
18.05.88

(21) Anmeldenummer: **84114776.2**

(22) Anmeldetag: **05.12.84**

(51) Int. Cl.⁴: **F 01 K  23/06,** F 02 C  3/28,
F 02 C  6/10

(54) Verfahren zum Betreiben einer kombinierten Gas-Dampfturbinen-Kraftwerkanlage.

(30) Priorität: **31.01.84  CH 443/84**

(43) Veröffentlichungstag der Anmeldung:
**07.08.85 Patentblatt 85/32**

(45) Bekanntmachung des Hinweises auf die Patenterteilung:
**18.05.88 Patentblatt 88/20**

(84) Benannte Vertragsstaaten:
**CH DE FR GB LI SE**

(56) Entgegenhaltungen:
**FR-A-2 298 596**
**FR-A-2 331 680**
**GB-A-2 029 855**
**US-A-3 868 817**

(73) Patentinhaber: **BBC Brown Boveri AG, CH- 5401
Baden (CH)**

(72) Erfinder: **Kehlhofer, Rolf, Eichholzstrasse 14, CH-
8706 Meilen (CH)**

EP 0 150 340 B1

**Beschreibung**

Die vorliegende Erfindung betrifft ein Verfahren zum Betreiben einer kombinierten Gas-/Dampfturbinen-Kraftwerkanlage gemäss dem Oberbegriff des Patentanspruchs 1.

Unter dem Begriff "kombinierte Gas-/Dampfturbinen-Kraftwerkanlage" - im folgenden Kombianlage genannt - wird nachfolgend immer das Zusammenwirken einer Gasturbogruppe mit mindestens einem nachgeschalteten Dampfturbinenkreislauf verstanden, wobei die Gasturbinenabwärme in einem Abhitzekessel zur Erzeugung des für die Speisung einer Dampfturbine notwendigen Dampfes eingesetzt wird.

Wie aus DE-A-2 524 723 bekannt ist, wird der Abhitzedampferzeuger zur Erhöhung der Dampfturbinenleistung mit einer Zusatzfeuerung ausgerüstet. Diese Zusatzfeuerung sowie die Gasturbinenbrennkammer werden mit einem Brenngas betrieben, das aus einem mit Kohlevergasung arbeitenden Gaserzeuger gewonnen wird.

Diese Schaltung weist indessen den Nachteil auf, dass für die Kohlevergasung Luft verwendet wird, was bewirkt, dass daraus ein Brenngas niedrigen Heizwertes entsteht. Ein weiterer Nachteil dieser Schaltung ist darin zu sehen, dass die hohe Gasturbineneintrittstemperatur, gekoppelt mit einem hohen Druckverhältnis zur Verbesserung des Prozesswirkungsgrades, zu einer hohen $NO_X$-Ausstossmenge führen. Das Gesagte gilt auch für die Zusatzfeuerung im Abhitzedampferzeuger.

Nun unterliegen Gasturbinen bezüglich Abgaszusammensetzung - zunehmend der strengen Umweltschutzvorschriften vieler Staaten. Vor allem die Einhaltung der Vorschriften über die maximal erlaubten $NO_X$-Emissionen bereitet grosse Schwierigkeiten. So sind gegenwärtig rechtsgültige Vorschriften - namentlich in USA - in Kraft, wonach der Gehalt an $NO_X$-Emissionen ca. 75 ppm bei 15 Vol.-% $O_2$ nicht überschreiten darf. Ähnliche Vorschriften gilt es in den meisten Industriestaaten zu beachten, wobei eher zu erwarten ist, dass in Zukunft die zulässigen Emissionswerte eine Korrektur nach unten erfahren werden.

Aus der Zeitschrift "Brown-Boveri-Mitteilung", Band 65, CH-Baden, Oktober 1978, insbesondere S. 649 ist bekannt, als $NO_X$-Reduktionsmassnahme Wasser oder eine aus dem Prozess entnommene Dampfmenge in die Gasturbinenbrennkammer einzuspritzen resp. einzuleiten.

Wird Wasser in den Verbrennungsraum eingespritzt, so ist mit einer Reduzierung der Flammentemperatur und demzufolge mit einer merklichen Einbusse des Wirkungsgrades des Gesamtprozesses zu rechnen. Darüber hinaus ist Wasser nicht immer und überall in verfügbarer Menge vorhanden, so beispielsweise in niederschlagsarmen Gebieten, insbesondere wenn das dort verfügbare Wasser vorrangig zur Aufrechterhaltung des Kombiprozesses eingesetzt werden muss. Ferner muss das Wasser vor dessen Einsatz einer Aufbereitung unterzogen werden, denn viele im Wasser vorhandenen Mineralien, wie Natrium, Kochsalz etc., wirken sich auf die Gasturbine stark korrosiv aus. Diese Aufbereitung ist indessen kostspielig.

Auch eine Zuführung des aus dem Prozess entnommenen Dampfes in die Brennkammer führt zu einer Einbusse des Gesamtwirkungsgrades, selbst wenn mit der Dampfzugabe die Eintrittstemperatur der Gasturbine hoch gehalten werden kann:

Durch die Zugabe von Dampf zum Gasturbinenprozess ergibt sich zwar infolge zusätzlichen Massenstroms eine höhere Gesamtleistung, die jedoch wirkungsgradmässig geringer ausfällt, da hier die zusätzliche Brennstoffbedarfmenge in Rechnung gestellt werden muss.

Aus DE-A-2 554 848 ist bekannt, ein Teil der verdichteten Verbrennungsluft in die Luftzerlegungsanlage zuzuleiten, in der die Trennung der Luft in Sauerstoff und Stickstoff stattfindet. Während der Sauerstoff für den Betrieb des Gaserzeugers bereitgestellt wird, wird der Stickstoff in die Gasturbinenbrennkammer geleitet. Diese Schaltung ermöglicht zwar eine Reduktion des erzeugten $NO_X$, welche aber nur eine teilweise ist. Und da diese Gasturbinenabgase der Zusatzfeuerung im Abhitzedampferzeuger zugeführt werden, erhöhen sich durch die dortige Verbrennung die $NO_X$-Emissionen wieder auf unzulässige Werte.

Hier will die Erfindung Abhilfe schaffen.

Der Erfindung liegt die Aufgabe zugrunde, bei einem Verfahren, der eingangs genannten Art durch die integrale Zumischung von Stickstoff eine Minimierung der $NO_X$-Emissionen zu erhalten. Diese Aufgabe wird gelöst durch die Merkmale des kennzeichnenden Teils des Patentanspruchs 1.

Da einerseits die Gasturbinenabgase einen verminderten $NO_X$-Wert aufweisen und andererseits auch für die Zusatzfeuerung im Abhitzedampferzeuger ein Brenngas/Stickstoff-Gemisch eingesetzt wird, kann daraus eine optimale Minimierung der $NO_X$-Emissionen erzielt werden.

Bei weiteren bevorzugten Ausführungen wird das Brenngas/Stickstoff-Gemisch vor Befeuerung der Brennkammer und der Zusatzfeuerung im Abhitzedampferzeuger jeweils durch eine Entspannungsturbine geleitet. Die Entspannungsturbinen können Generatoren oder Verdichter antreiben. Beim Einsatz eines Luftverdichters kann die Luftzerlegungsanlage teilweise mechanisch angetrieben werden.

In der Zeichnung sind Ausführungsbeispiele der Erfindung schematisch dargestellt.

Es zeigt:

Fig. 1 eine Schaltung einer kombinierten Gas-/Dampfturbinen-Kraftwerksanlage mit integrierter Kohlevergasung,

Fig. 2 eine weitere Schaltung, wobei die Stickstoff-Entspannungsturbine einen Verdichter antreibt, der die Luftzerlegungsanlage versorgt,

Fig. 3 eine weitere Schaltung, bei welcher zwei Entspannungsturbinen vorgesehen sind, und

Fig. 4 eine letzte Schaltung, bei welcher die zwei Entspannungsturbinen in eine Maschine integriert sind.

Alle für das unmittelbare Verständnis der Erfindung nicht erforderlichen Elemente sind fortgelassen. Die Strömungsrichtung der diversen Arbeitsmedien ist mit Pfeilen bezeichnet. In den verschiedenen Figuren sind gleiche Elemente mit gleichen Bezugzeichen versehen.

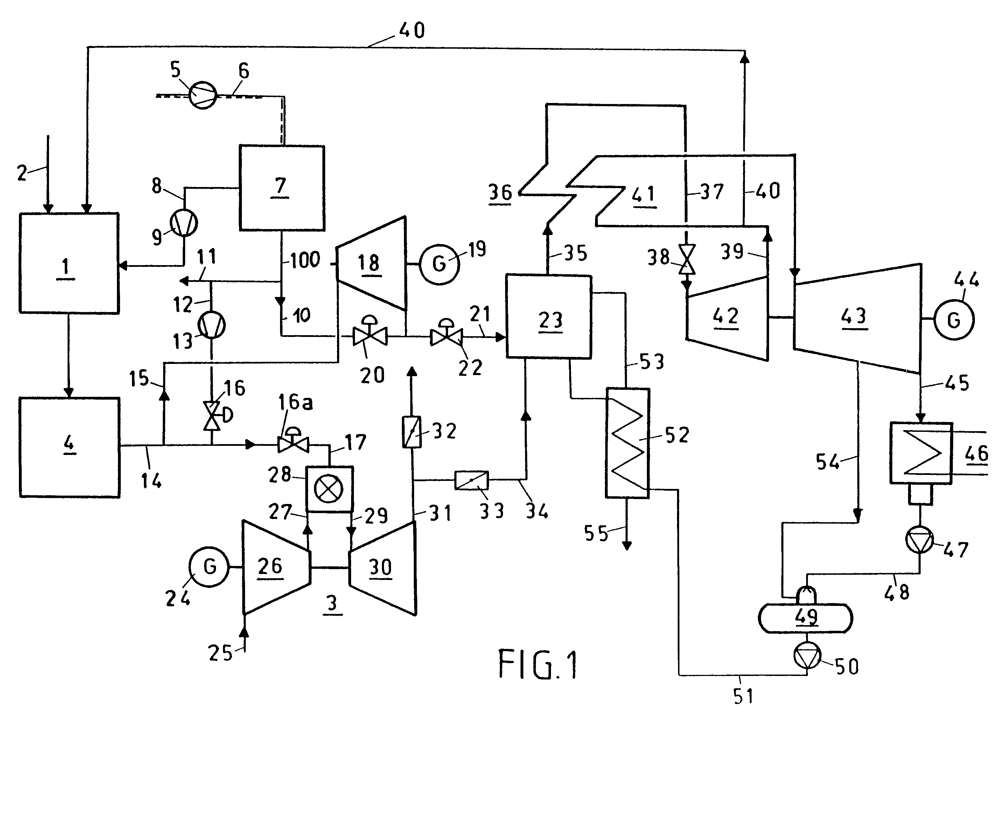

In Fig. 1 ist eine Kombianlage mit integrierter Kohlevergasung ersichtlich. Die Kombianlage selbst besteht in einem Zusammenwirken einer Gasturbinenanlage mit einem Dampfturbinenkreislauf. Die integrierte Kohlevergasung erfüllt die Aufgabe, die Bereitstellung des zum Betrieb der Gasturbine und der Zusatzfeuerung im Abhitzedampferzeugers notwendigen Brenngases sicherzustellen. Die Gasturbogruppe 3 als autonome Einheit besteht im wesentlichen aus einem Verdichter 26, einer mit ihm gekoppelten Gasturbine 30, einem Generator 24 und einer Brennkammer 28. Die angesaugte Luft 25 wird im Verdichter 26 komprimiert und gelangt über die Leitung 27 in die Brennkammer 28. Das in der Brennkammer 28 aufbereitete Heissgas wird über die Leitung 29 der Gasturbine 30 als Arbeitsmedium zugeführt. Die Gasturbinenabgase 31 werden entweder über die Klappe 32 direkt in die Umgebung abgeführt (Spezialbetrieb) oder im Normalfall über die Klappe 33 und über die Leitung 34 dem Abhitzedampferzeuger 23 zugeführt. Ein Teil des Restsauerstoffs der Gasturbinenabgase 31 wird im Abhitzedampferzeuger 23 verwendet, um die Brenngasmischung 21, die über das Regelventil 22 zugeführt wird, als Zusatzfeuerung zu verbrennen. Aus der freigesetzten thermischen Energie wird Hochdruckdampf 35 erzeugt, der über den Überhitzer 36 und über Zuleitung 37 und Regelventil 38 die Beaufschlagung der Hochdruckturbine 42 besorgt. Nach Teilentspannung 39 wird der Dampf im Zwischenüberhitzer 41 wieder aufgeheizt, um anschliessend der Mittel- und Niederdruckturbine 43 zugeführt zu werden. Hochdruck- 42, Mittel- und Niederdruckturbine 43 treiben den Generator 44 an. Der vollständig entspannte Dampf 45 wird in einem wasser- oder luftgekühlten Kondensator 46 kondensiert. Durch die Kondensatpumpe 47 gefördert, strömt dann das Kondensat 48 zum Speisewasserbehälter und Entgaser 49. Durch Entnahme von Anzapfdampf 54 aus der Mittel- und Niederdruckturbine 43 wird das zersprühte Kondensat 48 auf Siedezustand gebracht und entgast. Die Speisewasserpumpe 50 pumpt anschliessend das Wasser 51 durch den mit Rauchgasen 53 beheizten Economizer 52 bis in den Abhitzedampferzeuger 23 weiter. Die abgekühlten Rauchgase 55 werden über einen Kamin ins Freie abgeblasen. Soweit der Betrieb der Kombianlage.

Die integrierte Kohlevergasung besteht im wesentlichen aus einer Luftzerlegungsanlage 7, einem Gaserzeuger 1 und einer Gasreinigungsanlage 4. In der Luftzerlegungsanlage 7 wird die durch einen Verdichter 5 komprimierte Luft 6 in Sauerstoff 8 und Stickstoff 100 zerlegt. Der Gaserzeuger 1 wird mit Kohle 2 beschickt, wobei als Vergasungsmittel die aus einer geeigneten Stelle des Dampfturbinenprozesses entnommene Dampfmenge 40 und Sauerstoff 8 dienen. In der Zuleitung zum Gaserzeuger 1 wird der Sauerstoff 8 noch in einem Verdichter 9 weiter komprimiert. Das in der Vergasungsanlage 1 anfallende Gas wird anschliessend durch die Gasreinigungsanlage 4 geführt. Nach der Gasreinigung wird das Brenngas in zwei Ströme aufgeteilt. Die eine Leitung 14 führt zur Gasturbinenbrennkammer 28; die andere Leitung 15 führt Brenngas über die an einen Generator 19 gekoppelten Entspannungsturbine 18 zur Zusatzfeuerung im Abhitzedampferzeuger 23. Der aus der Luftzerlegungsanlage 7 anfallende Stickstoff 100 wird ebenfalls aufgeteilt. Eine Stickstoffmenge 10 strömt zum Abhitzedampferzeuger 23 und vermischt sich vorgangig mit dem aus der Entspannungsturbine 18 ausströmenden Brenngas 15. Das Regelventil 20 regelt das Verhältnis Stickstoff/Brenngas. Das Regelventil 22 regelt anschliessend die der Zusatzfeuerung im Abhitzedampferzeuger 23 zugeführte Brenngasmischung 21. Eine von der Stickstoffleitung 100 abgezweigte Stickstoffmenge 12 wird komprimiert (13) und vermischt sich dann mit dem Brenngas 14. Durch das Regelventil 16 wird das Verhältnis Brenngas/Stickstoff geregelt. Das Regelventil 16a regelt anschliessend die der Gasturbinenbrennkammer 28 zugeführte Brenngasmischung 17. Die überschüssige Stickstoffmenge wird über die Leitung 11 abgeführt.

Diese Schaltung bietet die Vorteile, dass die in der Brennkammer 28 erzeugte $NO_x$-Ausstossmenge reduziert wird und darüber hinaus daraus eine verminderte Bildung von $NO_x$ im Abhitzedampferzeuger 23 resultiert. Ferner wird dank der Zusatzfeuerung im Abhitzedampferzeuger 23 zusätzlich ein guter Teillastwirkungsgrad der Kombianlage erzielt. Da auch für die letztgenannte Zusatzfeuerung ein Brenngas/Stickstoff-Gemisch 21 eingesetzt wird, kann der $NO_x$-Ausstoss zusätzlich noch weiter reduziert werden.

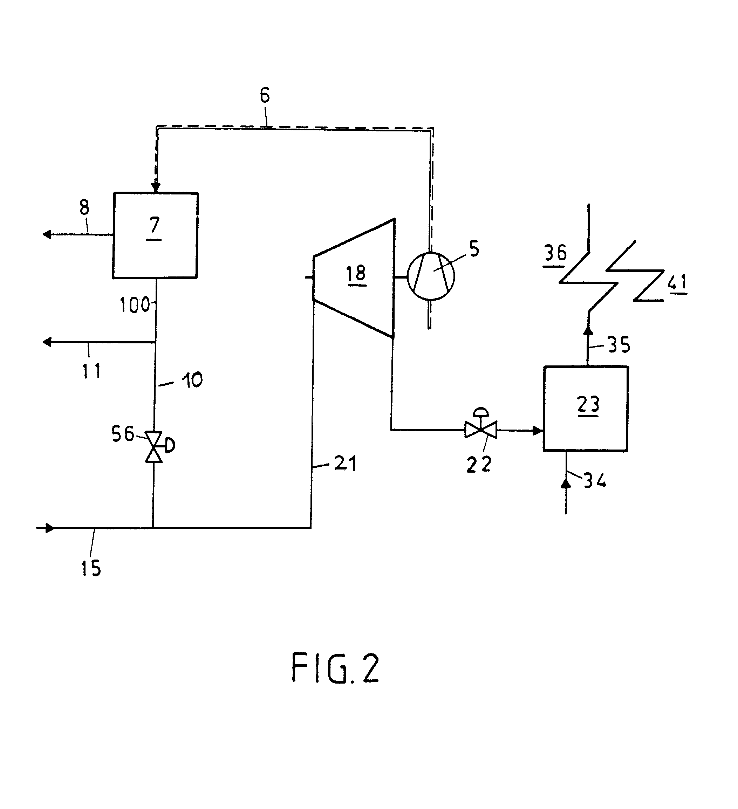

Fig. 2 unterscheidet sich gegenüber Fig. 1 dadurch, dass die Entspannungsturbine 18 mit einer Brenngasmischung 21 beaufschlagt wird. Das Regelventil 56 regelt das Verhältnis Stickstoff 10/Brenngas 15. Die Brenngasmischung, die einen Druck zwischen 20 und 100 bar aufweisen kann, wird in der Entspannungsturbine 18 auf einen tieferen Druck

5  0 150 340  6

entspannt. Die daraus entstehende mechanische Energie kann in Strom umgewandelt werden oder, wie die Fig. 2 zeigt, einen Verdichter 5 antreiben, der die Luftzerlegungsanlage 7 mit komprimierter Luft 6 versorgt.

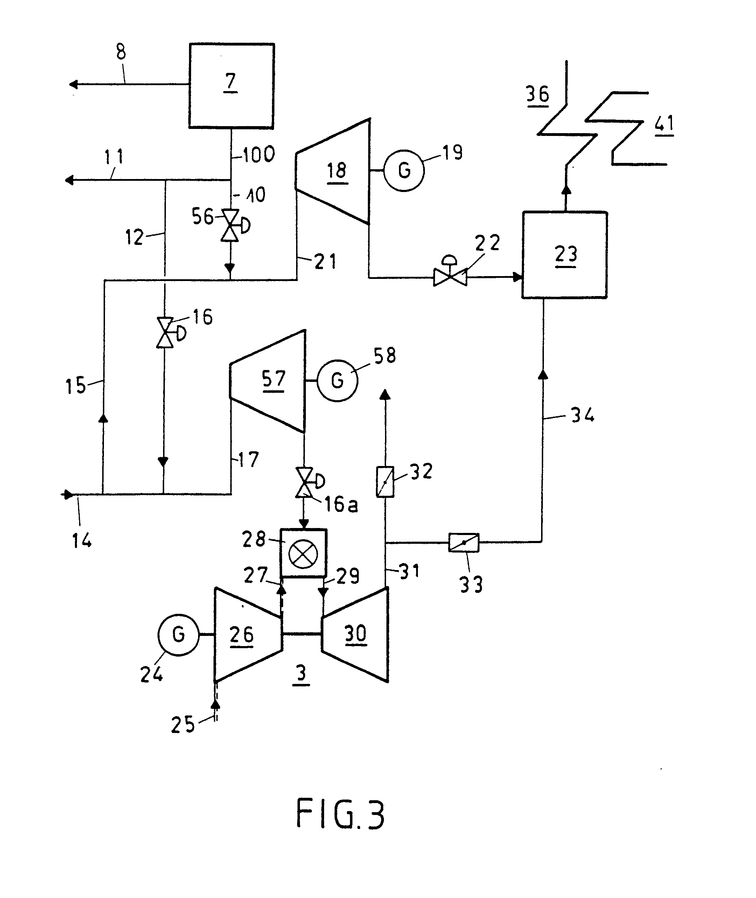

In Fig. 3 ist die Möglichkeit gezeigt, beide Brenngasmischungen 17 und 21 vor deren Einsatz individuell durch Entspannungsturbinen 57 resp. 18 zu leiten. Die Generatoren 58 und 19 können selbstverständlich durch einzelne Verdichter ersetzt werden.

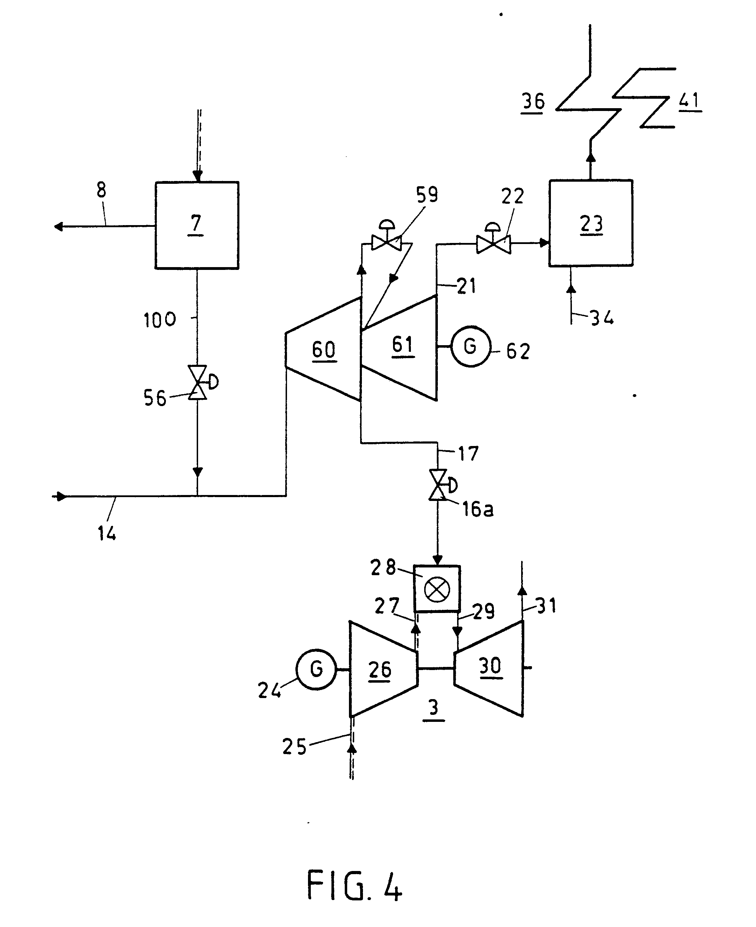

In Fig. 4 wird das Brenngas 14/Stickstoff 100-Gemisch durch die in eine Maschine integrierten Entspannungsturbinen 60, 61 geleitet. Nach einer ersten Beaufschlagung in Entspannungsturbine 60 strömt die Brenngasmischung 17 zur Gasturbinenbrennkammer 28. Eine zweite Strömung des Brenngasgemisches strömt über das Regelventil 59 zurück in die Entspannungsturbine 61, um dann als Brenngasmischung 21 den Abhitzedampferzeuger 23 zu befeuern. Die Entspannungsturbinen 60, 61 treiben einen Generator 62. Selbstverständlich kann dieser durch einen Verdichter ersetzt werden.

**Patentansprüche**

1. Verfahren zum Betreiben einer kombinierten Gas-/Dampfturbinen-Krftwerkanlage , welche eine Turbogruppe (3) mit Brennkammer (28) sowie einen der Gasturbine nachgeschalteten Abhitzedampferzeuger (23) aufweist, in welchem das Arbeitsmittel für den Dampfturbinen-Kreislauf auf den erforderlichen Zustand gebracht wird, und der zur Erhöhung der Dampfturbinenleistung mit einer Zusatzfeuerung ausgerüstet ist, wobei diese Zusatzfeuerung und die Gasturbinenbrennkammer (28) mit dem gleichen Brennstoff aus mindestens einem Gaserzeuger (1) betrieben werden, gekennzeichnet durch folgende Merkmale:
- die Gasturbinen-Brennkammer (28) wird mit aus einem mit Kohlevergasung arbeitenden Gaserzeuger (1) gewonnenen Brenngas (14) beaufschlagt, wobei in einer Luftzerlegungsanlage (7) Sauerstoff (8) für den Gaserzeuger (1) bereitgestellt wird,
- ein Teil des in der Luftzerlegungsanlage (7) anfallenden Stickstoff (12) wird in die Gasturbinen-Brennkammer (28) geleitet,
- Brenngas (15) aus dem Gaserzeuger (1) und ein weiterer Teil Stickstoff (10) aus der Luftzerlegungsanlage (7) werden der Zusatzfeuerung im Abhitzedampferzeuger (23) zugeführt,
- Brenngas (14, 15) und Stickstoff (10, 12) werden vor Eintritt in die Gasturbinen-Brennkammer (28) bzw. in den Abhitzedampferzeuger (23) in einem bestimmten Verhältnis (17, 21) miteinander gemischt.
2. Verfahren nach Anspruch 1, dadurch gekennzeichnet, dass das Brenngas (15)/Stickstoff (10)-Gemisch (21) vor Befeuerung des Abhitzedampferzeugers (23) durch eine Entspannungsturbine (18) strömt, welche einen Generator (19) antreibt.

3. Verfahren nach Anspruch 2, dadurch gekennzeichnet, dass die Entspannungsturbine (18) einen Verdichter (5) antreibt, der die Luftzerlegungsanlage (7) mit verdichteter Luft (6) versorgt.

4. Verfahren nach den Ansprüchen 1 und 2, dadurch gekennzeichnet, dass das Brenngas (14)/Stickstoff (12)-Gemisch (17) vor Befeuerung der Gasturbogruppe-Brennkammer (28) durch eine Entspannungsturbine (57) strömt, welche einen Generator (58) und/oder Verdichter (5) antreibt.

5. Verfahren nach den Ansprüchen 3 und 4, dadurch gekennzeichnet, dass die Entspannungsturbinen (57, 18) in eine Maschine integriert sind.

**Claims**

1. Process for operating a combined gas/steam turbine power station plant which exhibits a turbo-set (3) with combustion chamber (28) and a waste heat steam generator (23) downstream of the gas turbine, in which steam generator the working medium for the steam turbine circuit is brought to the required state and which is equipped with an additional furnace to increase the steam turbine output, in which arrangement this additional furnace and the gas turbine combustion chamber (28) are operated with the same fuel from at least one gas generator (1), characterized by following features:
- the gas turbine combustion chamber (28) is charged with a combustion gas (14) obtained from a gas generator (1) operating with gasification of coal, oxygen (8) for the gas generator (1) being provided in an air separation plant (7),
-a part of the nitrogen (12) produced in the air separation plant (7) is conducted into the gas turbine combustion chamber (28),
-combustion gas (15) from the gas generator (1) and a further part of nitrogen (10) from the air separation plant (7) are supplied to the additional furnace in the waste heat steam generator (23),
-combustion gas (14, 15) and nitrogen (10, 12) are mixed with one another in a particular ratio (17, 21) before entering the gas turbine combustion chamber (28) or the waste heat steam generator (23).

2. Process according to Claim 1, characterized in that the combustion gas (15)/nitrogen (10) mixture (21), before firing the waste heat steam generator (23), flows through an expansion-type turbine (18) which drives a generator (19).

3. Process according to Claim 2, characterized in that the expansion-type turbine (18) drives a compressor (5) which supplies the air separation plant (7) with compressed air (6).

4

4. Process according to Claims 1 and 2, characterized in that the combustion gas (14)/nitrogen (12) mixture (17), before firing the gas turbo-set combustion chamber (28), flows through an expansion-type turbine (57) which drives a generator (58) and/or compressor (5).

5. Process according to Claims 3 and 4, characterized in that the expansion-type turbines (57, 18) are integrated into one machine.

entraîne un générateur (58) et/ou le compresseur (5).

5. Procédé suivant les revendications 3 et 4, caractérisé en ce que les turbines de détente (57, 18) sont intégrées en une seule machine.

**Revendications**

1. Procédé d'exploitation d'une installation de centrale de force motrice combinée à turbines à gaz et à vapeur, qui comprend un groupe de turbine (3) avec chambre de combustion (28) ainsi qu'un générateur de vapeur à chaleur perdue (23) agencé à l'aval de la turbine à gaz, dans lequel l'agent de travail pour le circuit de turbine à vapeur est amené dans l'état nécessaire et qui est muni d'un chauffage d'appoint pour augmenter le rendement de la turbine à vapeur, ce chauffage d'appoint et la chambre de combustion de la turbine à gaz (28) fonctionnant avec le même combustible provenant d'un gazogène (1), caractérisé par les particularités suivantes:

-la chambre de combustion de la turbine à gaz (28) est alimentée en gaz combustible (14) obtenu à un gazogène (1) fonctionnant par gazéification du charbon, tandis que de l'oxygène (8) est préparé pour le gazogène (1) dans une installation de fractionnement de l'air (7),

-une fraction de l'azote (12) obtenu dans l'installation de fractionnement de l'air (7) est amenée dans la chambre de combustion de la turbine à gaz (28),

-du gaz combustible (15) provenant du gazogène (1) et une autre fraction d'azote (10) provenant de l'installation de fractionnement de l'air (7) sont amenés au chauffage d'appoint dans le générateur de vapeur à chaleur perdue (23),

-du gaz combustible (14, 15) et de l'azote (10, 12) sont mélangés ensemble avant l'entrée dans la chambre de combustion de la turbine à gaz (28) ou dans le générateur de vapeur à chaleur perdue (23), dans un rapport défini (17, 21).

2. Procédé suivant la revendication 1, caractérisé en ce que le mélange (21) gaz combustible (15)/azote (10) s'écoule, avant de chauffer le générateur de vapeur à chaleur perdue (23), par une turbine de détente (18) qui entraîne un générateur (19).

3. Procédé suivant la revendication 2, caractérisé en ce que la turbine de détente (18) entraîne un compresseur (5) qui alimente en air comprimé (6) l'installation de fractionnement de l'air (7).

4. Procédé suivant les revendications 1 et 2, caractérisé en ce que le mélange (17) de gaz combustible (14)/azote (12) s'écoule, avant de chauffer la chambre de combustion de la turbine à gaz (28), par une turbine de détente (57) qui

FIG.1

0 150 340

FIG.2

FIG.3

FIG. 4